# EUROPÄISCHE PATENTSCHRIFT

(11) **EP 1 318 932 B1**
(45) Veröffentlichungstag und Bekanntmachung des Hinweises auf die Patenterteilung: **06.12.2006**
(21) Anmeldenummer: 01972055.6
(22) Anmeldetag: 13.09.2001
(51) Int. Cl.: B60T 1/087, B60T 10/02

(54) **BETRIEBSMITTELVERSORGUNGSEINRICHTUNG**
OPERATING MATERIAL SUPPLY DEVICE
DISPOSITIF D'ALIMENTATION EN MATERIEL D'EXPLOITATION

(30) Priorität: 20.09.2000 DE 10046827
(43) Veröffentlichungstag der Anmeldung: 18.06.2003
(73) Patentinhaber: Voith Turbo GmbH & Co. KG, 89522 Heidenheim (DE)
(72) Erfinder: NITSCHE, Martin, 89547 Gerstetten (DE); BECKE, Martin, 89075 Ulm (DE)
(74) Vertreter: Dr. Weitzel & Partner
(86) Internationale Anmeldenummer: PCT/EP2001/010567
(87) Internationale Veröffentlichungsnummer: WO 2002/024500

(56) Entgegenhaltungen:
- EP-A- 0 428 311
- US-A- 3 941 224
- US-A- 4 432 442
- PATENT ABSTRACTS OF JAPAN vol. 017, no. 580 (M-1500), 21. Oktober 1993 (1993-10-21) & JP 05 170088 A (HINO MOTORS LTD), 9. Juli 1993 (1993-07-09)

## Beschreibung

Die Erfindung betrifft eine Betriebsmittelversorgungseinrichtung für schaltbare Elemente, insbesondere hydrodynamische Bauelemente in Anfahr-, Retarder-Einheiten oder Getriebebaueinheiten im einzelnen mit den Merkmalen aus dem Oberbegriff des Anspruchs 1.

Hydrodynamische Bauelemente in Anfahr-, Retarder-Einheiten oder Getriebebaueinheiten können schaltbar ausgeführt sein, was die Möglichkeit einer Befüllung und Entleerung voraussetzt. Dabei besteht zunehmend das Erfordernis einer schnellen Befüllung. Dabei sind beispielsweise bei Ausbilden hydrodynamischer Baueinheiten in Form von hydrodynamischen Retardern sehr kurze Füllzeiten aus Sicherheitsgründen erforderlich, um eine schnelle Bremswirkung oder einen geregelten Momentverlauf zu erreichen, welcher zum Beispiel einen bestimmten Drehzahlverlauf beim Hochlauf eines Motors bewirken soll. Gemäß allgemeinen, durch Benutzung bekannten Ausführungen im Stand der Technik erfolgt die Befüllung mit Hilfe von Betriebsmittelspeichereinrichtungen, welche zum Zeitpunkt der Befüllung von hydrodynamischen Elementen mit fremder Hilfsenergie vom Fahrzeug oder aus eigener Kraft den Füllvorgang beschleunigen. Dabei werden beispielsweise Kolbenspeicher benützt, die mit Federkraft oder Druckluft aus der Druckluftanlage des Fahrzeuges betätigt werden. Eine weitere Möglichkeit besteht darin, den gesamten Gehäuseraum unter Druck zu setzen und dadurch Betriebsmittel aus dem Ölsumpf in das entsprechende hydrodynamische Bauelement zu drücken. Andere Füllhilfen bestehen in der Verwendung von entsprechenden Pumpeinrichtungen.

Die Ausführungen gemäß dem Stand der Technik weisen jedoch den Nachteil auf, daß diese hinsichtlich der Umsetzung sehr energieaufwendig sind und ein besonderes Equipment voraussetzen.

Die japanische Offenlegungsschrift JP 05 170088 A beschreibt das Aufbringen eines Luftdruckes auf das Öl in einer Ölpfanne, um mit diesem Öl einen Retarder schneller befüllen zu können. Die aus diesem Dokument bekannten Merkmale sind im Oberbegriff von Anspruch 1 zusammengefasst.

Der Erfindung lag daher die Aufgabe zugrunde, eine Betriebsmittelversorgungseinrichtung für schaltbare Elemente von Anfahr-, Retarder-Einheiten oder Getriebebaueinheiten derart weiterzuentwickeln, daß die genannten Nachteile vermieden werden. Im einzelnen ist auf die Realisierung besonders kurzer Füllzeiten abzustellen und bei Verwendung von Druckluft als Druckmittel sollte der Luftverbrauch möglichst gering sein und effektiv erfolgen. Desweiteren sollte die erfindungsgemäß gestaltete Betriebsmittelversorgungseinrichtung auch bei mehrmaligen kurz aufeinanderfolgenden Betätigungen keinerlei Beeinträchtigung hinsichtlich ihrer Funktion und damit auch der Funktion des oder der schaltbaren Elemente zulassen. Der konstruktive Aufwand ist gering und der Kostenaufwand minimal zu halten.

Die erfindungsgemäße Lösung ist durch die Merkmale des Anspruchs 1 charakterisiert. Vorteilhafte Ausgestaltungen sind in den Unteransprüchen wiedergegeben.

Die Betriebsmittelversorgungseinrichtung für schaltbare Elemente, insbesondere hydrodynamische Bauelemente in Anfahreinheiten und Getriebebaueinheiten umfaßt einen Betriebsmittelspeicher mit einem im Gehäuse des entsprechenden schaltbaren Elementes oder der übergeordneten Anfahr-, Retarder- oder Getriebeabaueinheit angeordneten Betriebsmittelsumpf. Dieser ist über wenigstens eine Fülleitung mit dem schaltbaren Element, insbesondere dem hydrodynamischen Bauelement verbunden. Erfindungsgemäß ist der Betriebsmittelsumpf gegenüber dem restlichen Teil des Betriebsmittelspeichers bzw. dem Gehäuse des schaltbaren Elementes, insbesondere des hydrodynamischen Bauelementes oder einer übergeordneten Anfahr-, Retarder-Einheit oder Getriebebaueinheit druckdicht verschließbar, wozu entsprechende Mittel zum druckdichten Verschluß des Betriebsmittelsumpfes gegenüber der Umgebung oder dem Gehäuseinneraum vorgesehen werden. Zur Realisierung eines schnellen Befüllvorganges sind Mittel zur Beaufschlagung des Betriebsmittels im Betriebsmittelsumpf mit einem Beeinflussungdruck vorgesehen.

Die erfindungsgemäße Lösung bietet den Vorteil einer einfachen Befüllung mittels Druckmittel bei freier Gestaltung der geometrischen Form und Abmessungen des Betriebsmittelsumpfes, aufgrund welcher eine optimale Anpassung an den zur Verfügung stehenden Bauraum bei Konstruktion des Betriebsmittelversorgungssystems möglich wird. Ein weiterer Vorteil besteht in der Bereitstellung größtmöglicher Speichervolumina und einem geringen Druckmittelverbrauch, da nur das Betriebsmittelvolumen im Betriebsmittelsumpf, in der Regel dem Ölsumpf, verdichtet wird, während der übrige Teil des Beriebsmittelspeichers entlüftet bleibt. Kurz hintereinander erfolgende Schaltvorgänge werden nicht beeinträchtigt, da beim Abschalten abströmendes Öl aus den hydrodynamischen Elementen direkt in den Sumpf zurückgeführt wird. Der Betriebsmittelsumpf wird dabei sowohl für zurückströmendes Betriebsmittel von Schaltelementen als auch hydrodynamischen Komponenten genutzt.

Bezüglich der konkreten konstruktiven Ausführung der Mittel zum druckdichten Verschließen des Betriebsmittelsumpfes gegenüber der Umgebung oder des Gehäuseinnenraumes und der Mittel zur Beaufschlagung des Betriebsmittelsumpfes mit einem Beeinflussungsdruck bestehen eine Vielzahl von Möglichkeiten. Zur Realisierung rascher Befüllvorgänge sind diese funktional miteinander gekoppelt. Vorzugsweise erfolgt desweiteren eine bauliche Kopplung, wobei vorzugsweise wenigstens einzelne Komponenten Bestandteil beider sind.

Die Mittel zum druckdichten Verschluß des Betriebsmittelsumpfes gegenüber der Umgebung oder dem Gehäuseinnenraum umfassen mindestens ein Steuerventil mit mindestens einem Ventilglied, welches mit einem Ventilsitz, der von dem die Öffnung bildenden Element gebildet wird, zusammenwirkt und ein bewegbares Kolbenelement, welches mit dem Ventilglied gekoppelt ist. Das Steuerventil ist mit einer Stelleinrichtung zur Betätigung des Ventilgliedes gekoppelt. Diese verbindet einen Druckanschluß mit der Druckkammer. Auch die Mittel zur Erzeugung eines Beeinflussungsdruckes umfassen eine Ventileinrichtung, welche bei Beaufschlagung über eine Stelleinrichtung einen Druckmittelanschluß oder einen Anschluß an die Atmosphäre mit dem Betriebsmittelsumpf verbindet. Gemäß einer besonders kompakten Ausführung sind das Steuerventil der Mittel zum druckdichten Verschluß und die Ventileinrichtung zur Kopplung der Atmosphäre oder eines Druckmittelanschlusses mit dem Betriebsmittelsumpf in einer kombinierten Ventileinrichtung zusammengefaßt. Des weiteren wird die Stelleinrichtung für das Steuerventil und die Ventileinrichtung von einer beiden gemeinsam zugeordneten Stelleinrichtung gebildet. Die kombinierte Ventileinrichtung umfaßt mindestens einen Druckraum, in welchem das Ventilglied des Steuerventiles und das Ventilglied der zweiten Ventileinrichtung der Mittel zur Druckbeaufschlagung angeordnet und verschiebbar gelagert sind sowie einen Anschluß an die Atmosphäre oder eine Druckmittelquelle und einen weiteren zweiten Anschluß zum Betriebsmittelsumpf. Die Ventilglieder der Ventileinrichtung der Mittel zur Beaufschlagung und des Steuerventiles werden im drucklosen Zustand mittels Federeinrichtungen in einer vorgespannten Position gehalten. Die entsprechende Dimensionierung der Federeinrichtungen und der Beaufschlagungsflächen an den die Ventilglieder bildenden Kolbenelementen ermöglichen dabei die funktionale Kopplung zwischen dem Verschluß des Betriebsmittelsumpfes und der Befüllung ohne zusätzliche Steuerungsmaßnahmen.

Eine besonders vorteilhafte Anwendung der erfindungsgemäßen Lösung besteht in der Möglichkeit der Ankoppelung an einen, dem hydrodynamischen Bauelement zugeordneten druckdichten geschlossenen Kreislauf.

Bezüglich des Einsatzgebietes betehen keine Beschränkungen. Möglich sind sowohl Anwendungen im Fahrzeug als auch stationären Anlagen.

Die erfindungsgemäße Lösung wird nachfolgend anhand von Figuren erläutert. Darin ist im einzelnen folgendes dargestellt:
- Figur 1: verdeutlicht eine erfindungsgemäß gestaltete Betriebsmittelversorgungseinrichtung im drucklosen Zustand;
- Figur 2: verdeutlicht eine erfindungsgemäß gestaltete Betriebsmittelversorgungseinrichtung während des Verschließens des Betriebsmittelsumpfes;
- Figur 3: verdeutlicht eine erfindungsgemäß gestaltete Betriebsmittelversorgungseinrichtung bei Druckbeaufschlagung.

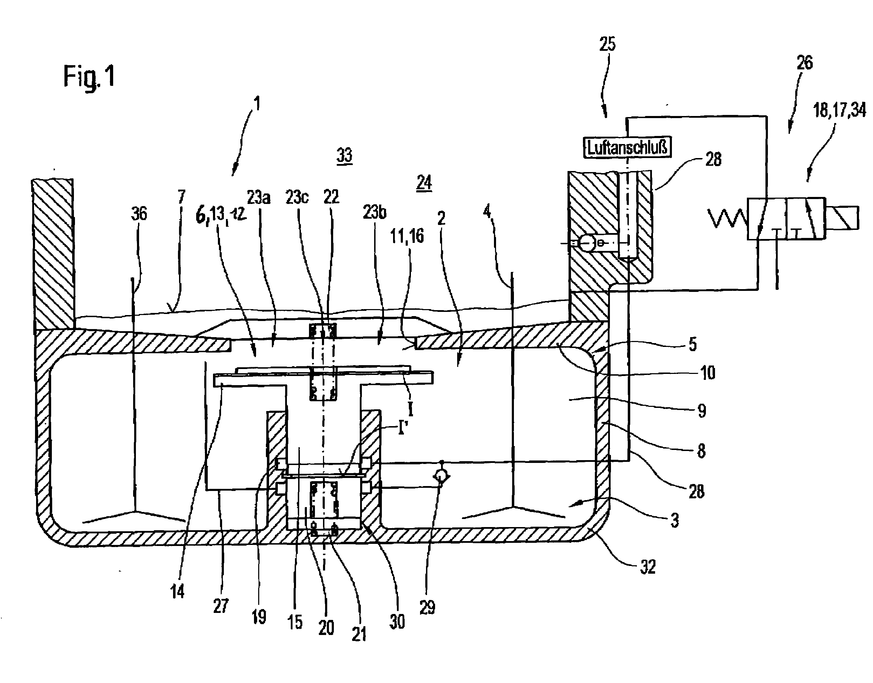

Figur 1 verdeutlicht eine erfindungsgemäß gestaltete Betriebsmittelversorgungseinrichtung 1 für schaltbare Elemente in Anfahr-, Retarder- und/oder Getriebebaueinheiten. Bei den schaltbaren Elementen handelt es sich dabei vorzugsweise um hydrodynamische Bauelemente in Form von hydrodynamischen Kupplungen, hydrodynamischen Bremsen oder hydrodynamischen Drehzahl-/Drehmomentwandlern. Die Betriebsmittelversorgungseinrichtung 1 umfaßt einen Betriebsmittelspeicher 2 mit einem Betriebsmittelsumpf 3. Der Betriebsmittelsumpf ist über mindestens eine Fülleitung 4 mit dem schaltbaren Element, insbesondere einem Arbeitsraum eines hydrodynamischen Bauelementes gekoppelt. Des weiteren ist eine Saugleitung 36 einer Ölversorgungspumpe vorgesehen. Der Betriebsmittelspeicher 2 ist in einem.Gehäuse angeordnet. Bei diesem handelt es sich um das Gehäuse des Schaltelementes, der Anfahr-, Retarder-Einheit oder der Getriebebaueinheit. Der Betriebsmittelspeicher 2 umfaßt ein Gehäuse 5, welches vorzugsweise vom Gehäuse 32 des schaltbaren Elementes, der Anfahr-, Retarder-Einheit oder der Getriebeeinheit gebildet wird. In einer besonders kompakten Ausgestaltung wird bei Zuordnung der Betriebsmittelversorgungseinrichtung 1 zu einem hydrodynamischen Bauelement das Gehäuse 5 des Betriebsmittelspeichers 2 vom Gehäuse des hydrodynamischen Bauelementes gebildet. Erfindungsgemäß ist der Betriebsmittelsumpf 3 verschließbar ausgeführt. Diese Funktion wird über Mittel 6 zum druckdichten Verschluß des Betriebsmittelsumpfes gegenüber der Umgebung oder dem Gehäuseinnenraum 33, in weichem sich der Betriebsmittelspeicher 2 befindet, realisiert. Der Betriebsmittelsumpf 3 und damit auch die Betriebsmittelspeichereinheit 2 ist dabei gegenüber dem schaltbaren Element immer derart angeordnet, daß dieser unterhalb des Betriebsmittelstandes 7, das heißt in der Regel Ölstandes im Betriebsmittelspeicher 2 angeordnet ist. Der Betriebsmittelsumpf 3 wird dabei von einem Gehäusewandbereich 8 umschlossen, welcher unterhalb des üblicherweise im schaltbaren Element beziehungsweise dem Gehäuse 32 des schaltbaren Elementes oder dessen übergeordneter Einheit vorliegenden Betriebsmittelstandes 7 liegt. Der Gehäusewandbereich 8 bildet dabei eine mit Betriebsmittel befüllbare Kammer 9, welche in Einbaulage im oberen Bereich an der oberen Begrenzungswand 10 mindestens eine Öffnung aufweist. Die Öffnung ist hier mit 11 bezeichnet. Die Mittel 6 zum druckdichten Verschluß des Betriebsmittelsumpfes 3 gegenüber der Umgebung oder dem restlichen Gehäuseinnenraum des Betriebsmittelspeichers 2 beziehungsweise bei Bildung dieses Gehäuses 5 aus dem Gehäuse des schaltbaren Elementes oder der Getriebebaueinheit oder eines Anfahrelementes gegenüber dessen Gehäuseinnenraum 33 umfassen dabei eine Einrichtung 12 zum Verschließen der Öffnung 11. Diese Einrichtung umfaßt ein Steuerventil 13, dessen Ventilglied 14 von einem bewegbaren Kolbenelement 15 gebildet wird, welches mit einem Ventilsitz 16, welcher von der Öffnung 11 gebildet wird, in Wirkverbindung tritt. Das Ventilglied 14 ist zu diesem Zweck mit Druckmittel beaufschlagbar, im einzelnen über ein Stellglied 17 zur Betätigung des Ventilgliedes 14, im dargestellten Fall in Form einer Ventileinrichtung 18, welche die Druckmittelzufuhr zum Ventilglied 14 steuert. Im dargestellten Fall wird das bewegbare Kolbenelement 15 in einer mit Druckmittel beaufschlagbaren Druckkammer 19 geführt. Zum Zwecke einer möglichst raschen Befüllung sind Mittel 26 zur Erzeugung eines Beeinflussungsdruckes auf das im Betriebsmittelsumpf 3 befindliche Betriebsmittel vorgesehen. Diese umfassen eine Ventileinrichtung 30 zur Kopplung der Atmosphäre 15 oder eines Druckmittelanschlusses in Form einer DRuckmittelquelle 28 mit dem Betriebsmittel im Betriebsmittelsumpf 3. Auch dieser Ventileinrichtung 30 ist eine Stelleinrichtung 34 zugeordnet. Die Ventileinrichtung 30 umfaßt im dargestellten Fall ein weiteres in der Druckkammer 19 angeordnetes ein Ventilglied bildendes Kolbenelement 20, welches durch eine Federeinrichtung 21 hinsichtlich seiner Lage vorgespannt ist. Die Federkraft der Federeinrichtung 21 ist dabei der Druckkraft in der Druckkammer 19 bei Druckbeaufschlagung entgegengerichtet. Im dargestellten Fall einer besonders kompakten und somit vorteilhaften Ausführung sind die Mittel 6 und die Mittel 26 funktional und baulich miteinander gekoppelt, wobei einzelne Komponenten von beiden Systemen verwendet werden, z.B. die Ventileinrichtung 18 als Stelleinrichtung 17 und 34 sowie der gemeinsame Druckraum 19 und die Koppelung mit der Atmosphäre 25. Vorzugsweise sind diese, wie für die Ventileinrichtungen 30 und 13 dargestellt, zu einer baulichen Einheit 35 zusammengefaßt.

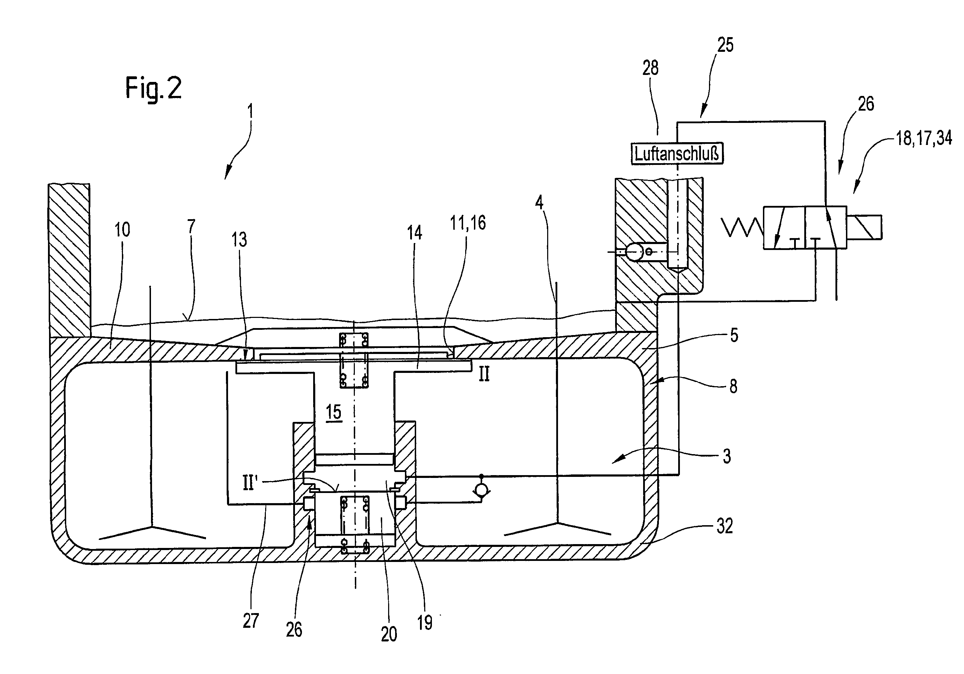

Vorzugsweise ist dem bewegbaren Kolbenelement 15 ebenfalls eine Federeinrichtung 22 zugeordnet, welche der Bewegung des Kolbenelementes 15 entgegenwirkt. Im drucklosen Zustand des Gesamtsystems wie in der Figur 1 dargestellt ist die Federeinrichtung 22 entlastet. In diesem Zustand befindet sich die Einrichtung 12 zum Verschluß der Öffnung 11, d. h. das Steuerventil 13 im geöffneten Zustand. Das Ventilglied 14 wirkt nicht mit dem Ventilsitz 16 zusammen. Es besteht die Möglichkeit des Übertrittes von Betriebsmittel aus dem oberhalb des Betriebsmittelsumpfes 3 vorhandenen Bereich des Betriebsmittelspeichers 2, insbesondere des Zufließens von Lecköl, dessen Zuflußrichtung mit 23a angezeigt ist, des Zurückfließens von Betriebsmittel vom hydrodynamischen Element, dessen Fließrichtung mit 23b bezeichnet ist und des Übertrittes von direkt zurückgeführtem Betriebsmittel gemäß 23c von außerhalb des verschließbaren Betriebsmittelsumpfes befindlichen und auch zum Teil mit Betriebsmittel befülltem Bereich 24 des Betriebsmittelspeichers 2. Beide Kolben, die Kolbenelemente 20 und 15 der zur baulichen Einheit 35 in Form einer kombinierten Ventileinrichtung 31 zusammengefaßten Ventileinrichtungen 13 und 30 befinden sich im entlasteten, das heißt drucklosen Zustand. In diesem Zustand ist der Druckmittelanschluß 25, welcher als Luftanschluß ausgeführt ist, von der Druckkammer 19 entkoppelt. Das Steuerventil 13 befindet sich sozusagen in seiner ersten Funktionsstellung I. Analog dazu auch die Ventileinrichtung 30 in I'. Die beim Verschließen der Öffnung 11 einzunehmenden Endfunktionsstellung II des Ventilgliedes 14 und II' des Ventilgliedes 20 sind in der Figur 2 verdeutlicht. Anhand dieser wird schematisch die Funktion des verschließbaren Betriebsmittelsumpfes 3 während des Verschließens dargelegt. Der Grundaufbau der Betriebsmittelversorgungseinrichtung 1 entspricht dem in der Figur 1 beschriebenen, weshalb für gleiche Elemente die gleichen Bezugszeichen verwendet werden. Die Darstellung gemäß Figur 2 unterscheidet sich lediglich hinsichtlich der Funktionsstellung II des Ventilgliedes 14 des Steuerventils 13 gegenüber der Funktionsstellung I in Figur 1.

Zum Verschließen des Betriebsmittelsumpfes 3 wird das Steuerventil 13, insbesondere das bewegbare Kolbenelement 15 mit Druck beaufschlagt. Dieser Druck wird über die Ventileinrichtung 18 in der Druckkammer 19 bereitgestellt. Dabei dient bei Ausgang aus dem drucklosen Zustand die über die Ventileinrichtung 18 dem Druckraum 19 zugeführte Druckluft der Verschiebung des Kolbenelementes 15 zum Schließen des Steuerventiles 13 durch Zusammenwirken mit dem Ventilsitz 16. Bei Verschluß der Öffnung 11 werden die Rückläufe von den einzelnen Elementen, entweder die Rückläufe direkt von den Schaltelementen, die bei Betriebsweise anfallenden Leckageverluste, gesperrt. Desweiteren ist es jedoch erforderlich zum Zwecke der Befüllung der Schaltelemente diese mit Betriebsmittel aus dem Betriebsmittelsumpf 3 zu versorgen. Dies erfolgt über die Fülleitung 4, wobei zum Zwecke einer möglichst raschen Befüllung Mittel 26 zur Erzeugung eines Beeinflussungsdruckes auf das im Betriebsmittelsumpf 3 befindliche Betriebsmittel vorgesehen sind. Nach Verschließen der Öffnung 11 ist der Betriebsmittelsumpf 3 druckdicht gegenüber dem übrigen Bereich 24 des Betriebsmittelspeichers 2 beziehungsweise des entsprechenden Gehäuses, welches das Gehäuse 5 des Betriebsmittelspeichers bildet. Die Mittel 26 umfassen des weiteren eine in den Betriebsmittelsumpf 3 hineinreichende Druckleitung 27, welche mit einer Druckmittelquelle 28, hier der Atmosphäre gekoppelt ist. Dabei werden im dargestellten Fall vorzugsweise die Mittel 26 zur Erzeugung eines Beeinflussungsdruckes und zum druckdichten Verschluß des Betriebsmittelsumpfes 3 gegenüber der Umgebung oder einem Gehäuseinnenraum von einer Einheit gebildet. Die als Stelleinrichtung 17 fungierende Ventileinrichtung 18 wird zur Beaufschlagung der Druckkammer 19 zur Realisierung einer Bewegung des Kolbenelementes 15 gleichzeitig als Stelleinrichtung für die Betätigung der Ventileinrichtug 30, insbesondere des zweiten Kolbenelementes 20, welches eine Kopplung zwischen dem Druckmittelanschluß und dem Betriebsmittelsumpf ermöglicht oder versperrt, zur Kopplung einer Druckmittelquelle 28 bzw. der Atmosphäre mit dem Betriebsmittelsumpf 3 verwendet.

In der Figur 2 weist das Kolbenelement 20 eine Funktionsstellung II' auf, in welcher der Druckmittelanschluß 25 lediglich in die Druckkammer 19 mündet und der den Übergang des Druckmittels aus der Druckkammer 19 in den Betriebsmittelsumpf 3 versperrt. Die kombinierte Ventileinrichtung 31 dient somit nicht nur lediglich zum Verschließen des Betriebsmittelsumpfes 3 sondern gleichzeitig auch zur Steuerung des Beeinflussungsdruckes auf den Betriebsmittelsumpf 3. Diese Ausführung stellt damit eine besonders kompakte Baueinheit mit sehr geringer Anzahl von Einzelelementen dar. Es besteht theoretisch auch die Möglichkeit der Trennung dieser Funktion, was jedoch zu einer erhöhten Bauteilanzahl und einem erhöhten Steuerungsaufwand führt.

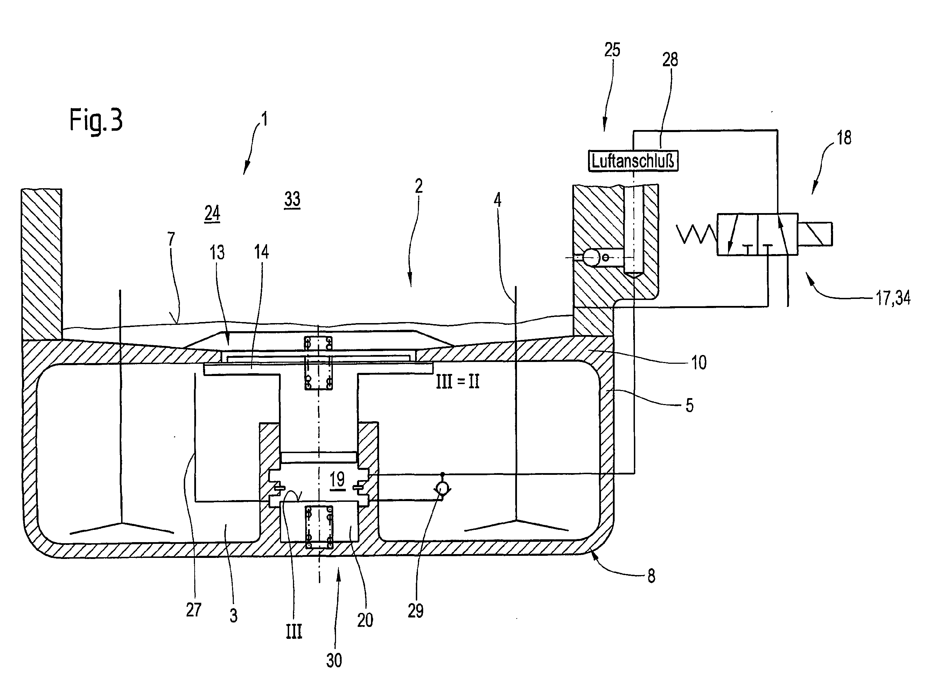

Die Figur 3 verdeutlicht den dritten Funktionszustand, welcher für das Ventilglied 14 zum Verschließen der Öffnung 11 mit III bezeichnet ist und für das zweite Kolbenelement zur Freigabe der Verbindung zwischen Druckmittelanschluß 28 bzw. der Atmosphäre 25 und Betriebsmittelsumpf 3 mit III' bezeichnet ist. Da sich der Betriebsmittelsumpf 3 unterhalb des sich üblicherweise einstellenden Betriebsmittelspiegels, insbesondere des Funktionsmittelstandes 7 im Betriebsmittelspeicher 2 angeordnet ist, ist der Betriebsmittelsumpf 3 in der Regel immer mit Betriebsmittel befüllt. Dabei bewirkt einströmendes Druckmittel, beispielsweise lediglich einströmende Luft über den Druckmittelanschluß 25 sofort eine Erhöhung des Betriebsmitteldruckes im Betriebsmittelsumpf 3 ohne daß das Todvolumen im Betriebsmittelsumpf verdichtet werden muß. Der so entstandene Betriebsmitteldruck führt zu einem Transport des Betriebsmittels aus dem Betriebsmittelsumpf 3 über die Fülleitung 4 zum Schaltelement. Der übrige Teil des Betriebsmittelspeichers 2, das heißt insbesondere des teilweise mit Betriebsmittel befüllten Bereiches 24 außerhalb der räumlichen Abmessungen des Betriebsmittelsumpfes. Sobald der Befüllungsvorgang abgeschlossen ist, wird der Druckmittelanschluß 25, insbesondere die Luftzufuhr abgeschaltet und die komprimierte Luft im Betriebsmittelsumpf 3 kann über die dort angeordnete Rückschlagventileinrichtung 29 über die Kopplung mit dem restlichen Innenraum, insbesondere in den entlüfteten Teil des Gehäuses, das heißt Bereich 24, entweichen und von dort weiter an die Atmosphäre gelangen, so daß die einzelnen Kolbenelemente - Kolbenelement 20 und Kolbenelement 15 wieder in ihre im drucklosen Zustand angestrebte Stellung I beziehungsweise I' verschoben werden und die Verbindung zwischen dem Betriebsmittelsumpf und dem restlichen Bereich 24 des Betriebsmittelspeichers wieder herstellt. Das in der Zwischenzeit angesammelte Lecköl beziehungsweise Betriebsmittel im entlüfteten Bereich 24 des Betriebsmittelspeichers kann über die nunmehr wieder freigegebene Öffnung 11 in den Betriebsmittelsumpf zurückfließen. Eine andere Variante besteht darin, das zurückströmende Betriebsmittel direkt über Rückschlagventile in den Betriebsmittelsumpf 3 zurückzuleiten.

Die erfindungsgemäße Lösung basiert darauf, eine schnelle Befüllung von Schaltelementen in Getriebebaueinheiten, Anfahreinheiten, Retardereinheiten oder ähnlichem zu ermöglichen. Dabei wird das zur Befüllung erforderliche Betriebsmittel aus einem Betriebsmittelsumpf eines Betriesmittelspeichers 2 genutzt, wobei dieses zum Zwecke des Füllens unter Druck gesetzt wird. Dies setzt jedoch voraus, daß der Betriebsmittelsumpf 3 gegenüber der Atmosphäre beziehungsweise dem übrigen Innenraum des Betriebsmittelspeichers 2 druckdicht verschließbar ist. Desweiteren sind entsprechende Mittel zur Bereitstellung oder Erzeugung eines Beeinflussungsdruckes auf den druckdicht abgeschlossenen Betriebsmittelsumpf erforderlich. Dabei können die beiden Funktionen - druckdichter Verschluß des Betriebsmittelsumpfes 3 und Erzeugung beziehungsweise Bereitstellung eines Beeinflussungsdruckes und Beaufschlagung des Betriebsmittelsumpfes 3 mit diesem von unterschiedlichen Einrichtungen ausgeübt werden. In einer besonders vorteilhaften Ausführung gemäß der Figuren 1 bis 3 wird dazu jedoch eine Steuerventileinrichtung mit entsprechenden Leitungsverbindungen verwendet. Die Ausübung dieser Funktion, insbesondere die Einstellung der entsprechenden Ventilstellung wird durch die entsprechende Dimensionierung der über die Federeinrichtungen an den Ventilkolbenelementen 20 und 15 wirkenden Kräfte und die Gestaltung dieser Kolben beziehungsweise deren Dimensionierung erzielt. Andere Ausführungen sind ebenfalls denkbar.

### Bezugszeichenliste

- 1: Betriebsmittelversorgungseinrichtung
- 2: Betriebsmittelspeicher
- 3: Betriebsmittelsumpf
- 4: Fülleitung
- 5: Gehäuse
- 6: Mittel zum druckdichten Verschluß des Betriebsmittelsumpfes gegenüber der Umgebung oder dem Gehäuseinnenraum
- 7: Funktionsmittelstand
- 8: Gehäusebereich
- 9: Kammer
- 10: obere Begrenzungswand
- 11: Öffnung
- 12: Einrichtung zum Verschließen der Öffnung 11
- 13: Steuerventil
- 14: Ventilglied
- 15: bewegbares Kolbenelement
- 16: Ventilsitz
- 17: Mittel zur Betätigung des Ventilgliedes
- 18: Ventileinrichtung
- 19: Druckkammer
- 20: Kolbenelement
- 21: Federeinrichtung
- 22: Federeinrichtung
- 23a, 23b, 23c: Zuflußrichtung
- 24: teilweise mit Betriebsmittel befüllbarer und außerhalb des Betriebsmittelsumpfes befindlicher Bereich
- 25: Druckmittelanschluß
- 26: Mittel zur Beaufschlagung des Betriebsmittelsumpfes mit einem Beeinflussungsdruck
- 27: Druckleitung
- 28: Druckmittelquelle
- 29: Rückschlagventileinrichtung
- 30: Ventileinrichtung
- 31: kombinierte Ventileinrichtung
- 32: Gehäuse
- 33: Gehäuseinnenraum
- 34: Stelleinrichtung
- 35: bauliche Einheit
- 36: Saugleitung

## Patentansprüche

1. Betriebsmittelversorgungseinrichtung (1) für hydrodynamische Bauelemente,
1.1 mit einem in einem Gehäuse angeordneten Betriebsmittelspelcher (2), umfassend einen Betriebsmittelsumpf (3);
1.2 mit mindestens einer Fülleitung (4), welche den Betriebsmittelsumpf (3) mit dem hydrodynamischen Bauelement verbindet;
1.3 der Betriebsmittelsumpf (3) ist durch Mittel (6) druckdicht verschließbar;
1.4 der Betriebsmittelsumpf (3) ist im unteren Bereich des Betriebsmittelspeichers (2) angeordnet;
1.5 der Betriebsmittelsumpf (3) ist gegenüber dem restlichen Bereich des Betriebsmittelspeichers (2) durch Gehäusewände abgegrenzt und über mindestens eine Öffnung (11) mit dem Raum des Betriebsmittelspeichers (2) außerhalb des Betriebsmittelsumpfes (3) verbunden, **gekennzeichnet durch** die folgenden Merkmale:
1.6 die Mittel (6) zum druckdichten Verschluß des Betriebsmittelsumpfes gegenüber der Umgebung oder dem Gehäuseinnenraum umfassen mindestens ein Steuerventil (13);
1.7 das Steuerventil (13) umfaßt mindestens ein Ventilglied (14), welches mit einem Ventilsitz (16), der von der die Öffnung (11) bildenden Gehäusewand gebildet wird, zusammenwirkt und ein bewegbares Kolbenelement (15), welches mit dem Ventilglied (14) gekoppelt ist;
1.8 das Steuerventil (13) ist mit einer Stelleinrichtung (17) zur Betätigung des Ventilgliedes (14) gekoppelt.

2. Betriebsmittelversorgungseinrichtung (1) nach Anspruch 1, **dadurch gekennzeichnet, daß** der Betriebsmittelspeicher (2) im Gehäuse einer Anfahreinheit. Retardereinheit oder der Getriebebaueinheit angeordnet ist, welche ein durch die Betriebsmittelversorgungseinrichtung versorgtes hydrodynamisches Schaltelements umfasst.

3. Betriebsmittelversorgungseinrichtung (1) nach einem der Ansprüche 1 bis 2, **dadurch gekennzeichnet, daß** dem verschließbaren Betriebsmittelsumpf (3) Mittel (26) zur Beaufschlagung mit einem Beeinflussungsdruck (26) zugeordnet sind.

4. Betriebsmittelversorgungseinrichtung (1) nach Anspruch 3, **dadurch gekennzeichnet, daß** die Mittel (6) zum druckdichten Verschließen des Betriebsmittelsumpfes (3) gegenüber der Umgebung oder des Gehäuseinnenraumes mit den Mitteln (26) zur Beaufschlagung des Betriebsmittelsumpfes (3) mit einem Beeinflussungsdruck funktional gekoppelt sind.

5. Betriebsmittelversorgungseinrichtung (1) nach einem der Ansprüche 3 oder 4, **dadurch gekennzeichnet, daß** die Mittel (6) zum druckdichten Verschließen des Betriebsmittelsumpfes (3) mit den Mitteln (26) zur Beaufschlagung des Betriebsmittelsumpfes (3) mit einem Beeinflussungsdruck baulich gekoppelt sind.

6. Betriebsmittelversorgungseinrichtung (1) nach einem der Ansprüche 3 bis 5, **dadurch gekennzeichnet, daß** die Mittel (6) zum druckdichten Verschluß des Betriebsmittelsumpfes (3) und die Mittel (26) zur Beaufschlagung des Betriebsmittelsumpfes mit einem Beeinflussungsdruck wenigstens teilweise in einer Baueinheit zusammengefaßt sind.

7. Betriebsmittelversorgungseinrichtung (1) nach einem der Ansprüche 1 bis 6, **dadurch gekennzeichnet, daß** die Stelleinrichtung (17) mit einem Druckmittelanschluß (25, 28) gekoppelt ist.

8. Betriebsmittelversorgungseinrichtung (1) nach einem der Ansprüche 3 bis 7, **dadurch gekennzeichnet, daß** die Mittel (26) zur Erzeugung eines Beeinflussungsdruckes eine Ventileinrichtung (30) umfassen, welche bei Beaufschlagung über eine Stelleinrichtung (34) eine Druckmittelquelle (28) oder einen Anschluß an die Atmosphäre (25) mit dem Betriebsmittelsumpf (3) verbindet.

9. Betriebsmittelversorgungseinrichtung (1) nach Anspruch 8, **dadurch gekennzeichnet, daß** das Steuerventil (13) der Mittel zum druckdichten Verschluß (6) und die Ventileinrichtung (30) der Mittel (26) zur Beaufschlagung des Betriebsmittelsumpfes (3) zur Kopplung der Atmosphäre (25) oder einer Druckmittelquelle (28) mit dem Betriebsmittelsumpf (3) in einer kombinierten Ventileinrichtung (31) zusammengefaßt sind und die Stelleinrichtung (17, 34) für das Steuerventil (13) und die Ventileinrichtung (30) von einer beiden gemeinsam zugeordneten Stelleinrichtung gebildet wird.

10. Betriebsmittelversorgungseinrichtung (1) nach Anspruch 9, **gekennzeichnet durch** die folgenden Merkmale:
die kombinierte Ventileinrichtung (31) umfaßt mindestens einen Druckraum (19), in welchem das Ventilglied (14) des Steuerventiles (13) und das Ventilglied (20) der Ventileinrichtung (30) angeordnet und verschiebbar gelagert sind;
mit einem Druckmittelanschluß (25) an die Atmosphäre oder eine Druckmittelquelle (28);
mit einem weiteren zweiten Anschluß (27) zum Betriebsmittelsumpf (3).

11. Betriebsmittelversorgungseinrichtung (1) nach Anspruch 10, **dadurch gekennzeichnet, daß** die Ventilglieder (14, 20) der Ventileinrichtung (30) der Mittel (26) und des Steuerventiles (13) mittels Federeinrichtungen (21, 22) im drucklosen Zustand des Druckraumes (19) in einer vorgespannten Position gehalten werden und die Federeinrichtung und Ventilglieder (14, 20) der Ventileinrichtung (30) der Mittel (26) und des Steuerventiles (13) derart dimensioniert sind, daß automatisch mit Erreichen des Verschlusses des Betriebsmittelsumpfes die Beaufschlagung des Betriebsmittelsumpfes (3) erfolgt.

12. Betriebsmittelversorgungseinrichtung (1) nach einem der Ansprüche 1 bis 11, **dadurch gekennzeichnet, daß** die Gehäusewände (8, 10) des Betriebsmittelsumpfes (3) vom Gehäuse (32) des hydrodynamischen Bauelementes gebildet wird.

13. Betriebsmittelversorgungseinrichtung (1) nach einem der Ansprüche 1 bis 12, **dadurch gekennzeichnet, daß** die Gehäusewände (8, 10) des Betriebsmittelsumpfes (3) vom Gehäuse der Anfahreinheit gebildet werden.

14. Betriebsmittelversorgungseinrichtung (1) nach einem der Ansprüche 1 bis 13, **dadurch gekennzeichnet, daß** die Gehäusewände (8, 10) des Betriebsmittelsumpfes (3) vom Gehäuse einer dem hydrodynamischen Bauelement zugeordneten Getriebebaueinheit und/oder Retardereinheit gebildet werden.

15. Verwendung einer Betriebsmittelversorgungseinrichtung (1) gemäß einem der Ansprüche 1 bis 14 in einem dem hydrodynamischen Bauelement zugeordneten geschlossenen Kreislauf.

16. Verwendung der Betriebsmittelvesorgungseinrichtung (1) gemäß einem der Ansprüche 1 bis 14 in einem Fahrzeug.

17. Verwendung einer Betriebsmittelversorgungseinrichtung (1) gemäß einem der Ansprüche 1 bis 14 in einer stationären Anlage.

## Claims

1. An operating medium supply device (1) for hydrodynamic components,
1.1 with an operating medium storage reservoir (2) arranged in a housing, comprising an operating medium sump (3);
1.2 with at least one filling conduit (4) connecting the operating medium sump (3) with the hydrodynamic component;
1.3 with the operating medium sump (3) being sealable in a pressure-tight manner by means (6);
1.4 with the operating medium sump (3) being arranged in the lower region of the operating medium storage reservoir (2);
1.5 with the operating medium sump (3) being delimited from the remaining area of the operating medium storage reservoir (2) by housing walls and being connected via at least one opening (11) with the space of the operating medium storage reservoir (2) outside of the operating medium sump (3);
**characterized by** the following features:
1.6 the means (6) for sealing the operating medium sump in a pressure-tight manner against the ambient environment or the inner space of the housing comprise at least one control valve (13);
1.7 the control valve (13) comprises at least one valve member (14) which cooperates with a valve seat (16) which is formed by the housing wall forming the opening (11) and a movable piston element (15) which is coupled with the valve member (14);
1.8 the control valve (13) is coupled with an actuating device (17) for actuating the valve member (14).

2. An operating medium supply device (1) according to claim 1, **characterized in that** the operating medium storage reservoir (2) is arranged in the housing of a start-up unit, retarder unit or the transmission module which comprises a hydrodynamic switching element which is supplied by the operating medium supply device.

3. An operating medium supply device (1) according to one of the claims 1 to 2, **characterized in that** the sealable operating medium sump (3) is associated with means (26) for pressurization with an influencing pressure (26).

4. An operating medium supply device (1) according to claim 3, **characterized in that** the means (6) for the pressure-tight sealing of the operating medium sump (3) against the ambient environment or the inner space of the housing are functionally coupled with means (26) for pressurizing the operating medium sump (3) with an influencing pressure.

5. An operating medium supply device (1) according to one of the claims 3 or 4, **characterized in that** the means (6) for the pressure-tight sealing of the operating medium sump (3) against the ambient environment or the inner space of the housing are structurally coupled with the means (26) for pressurizing the operating medium sump (3) with an influencing pressure.

6. An operating medium supply device (1) according to one of the claims 3 or 5, **characterized in that** the means (6) for the pressure-tight sealing of the operating medium sump (3) and the means (26) for pressurizing the operating medium sump (3) with an influencing pressure are combined at least partly in one modular unit.

7. An operating medium supply device (1) according to one of the claims 1 to 6, **characterized in that** the actuating device (17) is coupled with a pressure medium connection (25, 28).

8. An operating medium supply device (1) according to one of the claims 3 to 7, **characterized in that** the means (26) for generating an influencing pressure comprise a valve device (30) which upon activation via an actuating device (34) connects a pressure medium source (26) or a connection to atmosphere (25) with the operating medium sump (3).

9. An operating medium supply device (1) according to claim 8, **characterized in that** the control valve (13) of the means for pressure-tight sealing (6) and the valve device (30) of the means (26) for pressurizing the operating medium sump (3) are combined in a combined valve device (31) for coupling the atmosphere or a pressure medium source (28) with the operating medium sump (3) and the actuating device (17, 34) for the control valve (13) and the valve device (30) is formed by an actuating device jointly associated with the two.

10. An operating medium supply device (1) according to claim 9, **characterized by** the following features:
the combined valve device (31) comprises at least one pressure chamber (19) in which the valve member (14) of the control valve (13) and the valve member (20) of the valve device (30) are arranged and are held in a displaceable manner;
with a pressure medium connection (25) to atmosphere or a pressure medium source (28);
with a further second connection (27) to the operating medium sump (3).

11. An operating medium supply device (1) according to claim 10, **characterized in that** the valve members (14, 20) of the valve device (30) of the means (26) and the control valve (13) are held by means of spring devices (21, 22) in a pretensioned position in the pressureless state of the pressure chamber (19) and the spring device and the valve members (14, 20) of the valve device (30) of the means (26) and the control valve (13) are dimensioned in such a way that the pressurization of the operating medium sump (3) occurs automatically upon reaching the seal of the operating medium sump.

12. An operating medium supply device (1) according to one of the claims 1 to 11, **characterized in that** the housing walls (8, 10) of the operating medium sump (3) are formed by the housing (32) of the hydrodynamic component.

13. An operating medium supply device (1) according to one of the claims 1 to 12, **characterized in that** the housing walls (8, 10) of the operating medium sump (3) are formed by the housing of the start-up unit.

14. An operating medium supply device (1) according to one of the claims 1 to 13, **characterized in that** the housing walls (8, 10) of the operating medium sump (3) are formed by the housing of a transmission module and/or retarder unit which is associated with the hydrodynamic component.

15. The use of an operating medium supply device (1) according to one of the claims 1 to 14 in a closed circulation associated with the hydrodynamic component.

16. The use of an operating medium supply device (1) according to one of the claims 1 to 14 in a vehicle.

17. The use of an operating medium supply device (1) according to one of the claims 1 to 14 in a stationary unit.

## Revendications

1. Système d'alimentation (1) en fluide de travail pour éléments hydrodynamiques,
1.1 avec un réservoir (2) de fluide de travail disposé dans un boîtier, comprenant un carter (3) de fluide de travail ;
1.2 avec au moins un conduit de remplissage (4) reliant le carter (3) de fluide de travail à l'élément hydrodynamique ;
1.3 le carter (3) de fluide de travail est apte à être fermé par des moyens (6) de manière à être étanche à la pression ;
1.4 le carter (3) de fluide de travail est disposé dans la partie basse du réservoir (2) de fluide de travail ;
1.5 le carter (3) de fluide de travail est délimité par rapport au réservoir (2) de fluide de travail restant par des parois de boîtier et communique par au moins une ouverture (11) avec le volume du réservoir (2) de fluide de travail se trouvant à l'extérieur du carter (3) de fluide de travail,
**caractérisé par** les particularités suivantes :
1.6 les moyens (6) de fermeture étanche à la pression du carter de fluide de travail par rapport à son environnement ou au volume interne du boîtier comprennent au moins une vanne de commande (13) ;
1.7 la vanne de commande (13) comprend au moins un corps de vanne (14) qui coopère avec un siège de soupape (16) formé par la paroi de boîtier formant l'ouverture (11) et un élément piston (15) qui est couplé avec le corps de vanne (14) ;
1.8 la vanne de commande (13) est couplée à un servomécanisme (17) destiné à actionner le corps de vanne (14).

2. Système d'alimentation (1) en fluide de travail selon la revendication 1, **caractérisé en ce que** le réservoir (2) de fluide de travail est disposé dans le boîtier d'une unité de démarrage, d'un groupe ralentisseur ou de la boîte de vitesses qui comprend un élément de commutation hydrodynamique alimenté par le système d'alimentation en fluide de travail.

3. Système d'alimentation (1) en fluide de travail selon l'une quelconque des revendications 1 à 2, **caractérisé en ce que** des moyens (26) destinés à appliquer une pression de conditionnement (26) sont associés au carter (3) de fluide de travail apte à être fermé.

4. Système d'alimentation (1) en fluide de travail selon la revendication 3, **caractérisé en ce que** les moyens (6) de fermeture étanche à la pression du carter (3) de fluide de travail par rapport à son environnement ou au volume interne du boîtier sont couplés fonctionnellement avec les moyens (26) destinés à appliquer au carter (3) de fluide de travail une pression de conditionnement.

5. Système d'alimentation (1) en fluide de travail selon l'une quelconque des revendications 3 ou 4, **caractérisé en ce que** les moyens (6) de fermeture étanche à la pression du carter (3) de fluide de travail sont couplés structurellement aux moyens (26) destinés à appliquer au carter (3) de fluide de travail une pression de conditionnement.

6. Système d'alimentation (1) en fluide de travail selon l'une quelconque des revendications 3 à 5, **caractérisé en ce que** les moyens (6) de fermeture étanche à la pression du carter (3) de fluide de travail et les moyens (26) destinés à appliquer au carter de fluide de travail une pression de conditionnement sont du moins en partie regroupés en un ensemble structurel.

7. Système d'alimentation (1) en fluide de travail selon l'une quelconque des revendications 1 à 6, **caractérisé en ce que** le servomécanisme (17) est couplé à un raccord (25, 28) pour fluide comprimé.

8. Système d'alimentation (1) en fluide de travail selon l'une quelconque des revendications 3 à 7, **caractérisé en ce que** les moyens (26) destinés à générer une pression de conditionnement comprennent un système de vannes (30) qui, lors de l'application de cette pression, relie par l'intermédiaire d'un servomécanisme (34) une source (28) de fluide comprimé ou un raccord à l'atmosphère (25) au carter (3) de fluide de travail.

9. Système d'alimentation (1) en fluide de travail selon la revendication 8, **caractérisé en ce que** la vanne de commande (13) des moyens (6) de fermeture étanche à la pression et le système de vannes (30) des moyens (26) destinés à appliquer au carter (3) de fluide de travail une pression destiné à coupler l'atmosphère (25) ou une source (28) de fluide de travail au carter (3) de fluide de travail sont regroupés en un système de vannes (31) combiné et que le servomécanisme (17, 34) pour la vanne de commande (13) et le système de vannes (30) est formé par un servomécanisme commun associé aux deux.

10. Système d'alimentation (1) en fluide de travail selon la revendication 9, **caractérisé par** les particularités suivantes :
le système de vannes combiné (31) comprend au moins une enceinte de mise en pression (19) dans laquelle sont disposés, mobiles en coulissement, le corps de vanne (14) de la vanne de commande (13) et le corps de vanne (20) du système de vannes (30) ;
avec un raccord (25) du fluide comprimé à l'atmosphère ou une source de fluide comprimé (28) ;
avec un autre, deuxième raccord (27) au carter (3) de fluide de travail.

11. Système d'alimentation (1) en fluide de travail selon la revendication 10, **caractérisé en ce que**, moyennant des systèmes de ressorts (21, 22), les corps de vanne (14, 20) du système de vannes (30) des moyens (26) et de la vanne de commande (13) sont maintenus dans une position de précontrainte quand l'enceinte (19) de mise en pression n'est pas sous pression et que le système de ressorts et les corps de vanne (14, 20) du système de vannes (30) des moyens (26) et de la vanne de commande (13) sont dimensionnés de manière à provoquer automatiquement l'application de la pression sur le carter (3) de fluide de travail dès que celui-ci est fermé.

12. Système d'alimentation (1) en fluide de travail selon l'une quelconque des revendications 1 à 11, **caractérisé en ce que** les parois de boîtier (8, 10) du carter (3) de fluide de travail sont formées par le boîtier (32) de l'élément hydrodynamique.

13. Système d'alimentation (1) en fluide de travail selon l'une quelconque des revendications 1 à 12, **caractérisé en ce que** les parois de boîtier (8, 10) du carter (3) de fluide de travail sont formées par le boîtier de l'unité de démarrage.

14. Système d'alimentation (1) en fluide de travail selon l'une quelconque des revendications 1 à 13, **caractérisé en ce que** les parois de boîtier (8, 10) du carter (3) de fluide de travail sont formées par le boîtier d'une boîte de vitesses et/ou d'un groupe ralentisseur associés à l'élément hydrodynamique.

15. Utilisation d'un système d'alimentation (1) en fluide de travail selon l'une quelconque des revendications 1 à 14 dans un circuit fermé associé à l'élément hydrodynamique.

16. Utilisation d'un système d'alimentation (1) en fluide de travail selon l'une quelconque des revendications 1 à 14 dans un véhicule.

17. Utilisation d'un système d'alimentation (1) en fluide de travail selon l'une quelconque des revendications 1 à 14 dans une installation fixe.
